(19) Europäisches Patentamt
European Patent Office
Office européen des brevets

(11) **EP 0 602 645 B1**

(12) **EUROPÄISCHE PATENTSCHRIFT**

(45) Veröffentlichungstag und Bekanntmachung des Hinweises auf die Patenterteilung:
26.11.1997 Patentblatt 1997/48

(51) Int Cl.6: **G05D 23/19**

(21) Anmeldenummer: 93120327.7

(22) Anmeldetag: 16.12.1993

(54) **Verfahren und Einrichtung zur Temperaturregelung in einer Peltier-Heiz- und/oder Kühleinrichtung**

Method and device for temperature control in a Peltier heating and cooling installation

Procédé et appareil de régulation de température dans une installation de chauffage et réfrigération à effet Peltier

(84) Benannte Vertragsstaaten:
**BE CH DE FR GB IT LI NL SE**

(30) Priorität: **17.12.1992 DE 4242841**

(43) Veröffentlichungstag der Anmeldung:
**22.06.1994 Patentblatt 1994/25**

(73) Patentinhaber: **LITEF GmbH**
**79115 Freiburg (DE)**

(72) Erfinder: **Kessler, Rolf, Dipl.-Ing.**
**D-79249 Merzhausen (DE)**

(74) Vertreter: **Müller, Frithjof E., Dipl.-Ing.**
**Patentanwälte**
**MÜLLER & HOFFMANN,**
**Innere Wiener Strasse 17**
**81667 München (DE)**

(56) Entgegenhaltungen:
**WO-A-90/04822**

- **ELECTRONIQUE APPLICATIONS. VOIRE BUREAU 23.12 M.MEES Nr. 45 , Dezember 1985 , PARIS FR Seiten 19 - 27 A.ROUSSEL 'Stabilisation de la puissance lumineuse d'une diode laser.'**
- **ELEKTRONIK Bd. 36, Nr. 14 , 10. Juli 1987 , MUNCHEN DE Seiten 82 - 84 G.MEYER 'Temperaturstabilisierung mit Peltier-Element.'**
- **ELEKTRONIK Bd. 38, Nr. 24 , 24. November 1989 , MUNCHEN DE Seiten 102 - 104 H.VAHLDIEK 'Temperieren von Bauelementen'**
- **REVIEW OF SCIENTIFIC INSTRUMENTS Bd. 63, Nr. 3 , März 1992 , NEW YORK US Seiten 1999 - 2003 XIAOSONG ZHU ET AL. 'Microcomputer-based Peltier thermostat for precision optical radiation measurements'**
- **JOURNAL OF PHYSICS E. SCIENTIFIC INSTRUMENTS Bd. 19, Nr. 10 , November 1986 , BRISTOL GB Seiten 781 - 785 D.KERAVIS ET AL. 'Cryostat à effet Peltier pour diffractométrie X à basse température.'**
- **ELECTRONICS & WIRELESS WORLD Bd. 94, Nr. 1629 , Juli 1988 , SURREY GB Seiten 687 - 688 P.TURNER 'Thermo-electric temperature controller.'**

**Beschreibung**

Die Erfindung betrifft ein Verfahren und eine Regeleinrichtung zur Temperaturregelung in einer mit mindestens einem Peltier-Element ausgerüsteten Heiz- und/oder Kühleinrichtung, bei dem (der) die Differenz zwischen einem Temperatur-Sollwert und einem gemessenen Temperatur-Istwert auf der Kaltseite des Peltier-Elements über eine PID-Regelstrecke den Strom für das Peltier-Element bestimmt.

Durch Ausnutzung des thermoelektrischen Effekts nach Peltier betriebene Kühl- und/oder Heizgeräte, wofür Temperaturkammern oder Temperaturprüfkammern ein Beispiel sein mögen, zeichnen sich unter anderem dadurch aus, daß bestimmte vorgebbare Temperaturwerte sehr genau eingestellt und gehalten werden können. Unter Nutzung des Peltier-Effekts sind die für solche Geräte bestimmten Temperaturregelungen in der Regel auf die Einhaltung einer definierten, sehr konstanten Temperatur ausgelegt, wie sie beispielsweise zur Temperierung elektronischer Bauelemente wie Laser-Dioden (zur Konstanthaltung der Wellenlänge). Mikroprozessoren (zur Erzielung höherer Taktraten) sowie für bestimmte elektronische Baugruppen und Geräte (zur Erhöhung der Zuverlässigkeit) benötigt wird. Tiefere Temperaturen lassen sich dabei in der Regel nur mit zusätzlichem Einsatz von flüssigen oder gasförmigen Kühlmedien erreichen und einhalten.

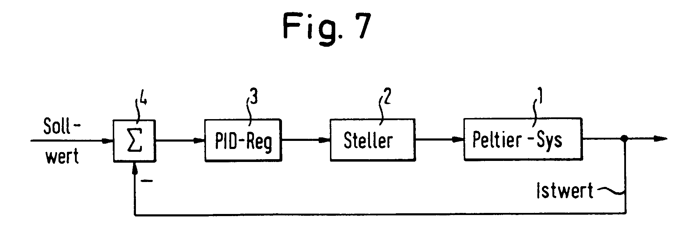

Die Fig. 7 der beigefügten Zeichnungen zeigt eine typische Regeleinrichtung für eine Peltier-Heiz-/Kühl-Kammer mit einer eingangsseitig über einen Differenzbildner 4 durch die Differenz zwischen einem vorgebbaren Temperatur-Sollwert und einem an den Peltier-Elementen 1 auf der Kaltseite gemessenen Temperatur-Istwert beaufschlagten PID-Regelstrecke 3. Der PID-Regler 3 liefert eine Steuerspannung an eine Stelleinrichtung 2, beispielsweise eine spannungssteuerbare Konstant-Stromquelle, die den Stromwert für das in der Regel aus mehreren elektrisch parallel geschalteten Peltier-Elementen bestehende Peltier-System 1 bestimmt.

PID-Regelstrecken der bekannten Art arbeiten prinzipiell zufriedenstellend. Für viele Anwendungsfälle jedoch ist der mögliche Temperaturbereich zu klein, insbesondere deshalb, weil die über die Peltier-Elemente "wegzupumpende" Verlustleistung unzureichend ist.

Der Erfindung liegt damit die Aufgabe zugrunde, ein Verfahren und eine Regeleinrichtung für aktiv mit einem Gleichstrom zu versorgende Peltier-Elemente innerhalb eines Heiz- /Kühlsystems zu schaffen, durch die sich der mögliche Temperaturbereich wesentlich erweitern läßt bei gleichzeitig verbesserter Wärmepumpleistung.

Die Erfindung ist bei einem Verfahren zur Temperaturregelung nach der eingangs genannten Art erfindungsgemäß dadurch gekennzeichnet, daß die Warmseitentemperatur des Peltier-Elements (der Peltier-Elemente) gemessen und der Temperatur-Differenzwert zwischen der Warmseitentemperatur und dem (Kaltseiten-)Temperatur-Istwert bestimmt sowie der Differenzwert gegen eine maximal zulässige Temperaturdifferenz zwischen der Warm- und Kaltseite des Peltier-Elements (der Peltier-Elemente) verglichen wird und daß als Temperatur-Sollwert ein für eine gewünschte Betriebstemperatur vorgegebener Temperatur-Zielwert verwendet wird, solange die maximal zulässige Temperaturdifferenz abzüglich eines festen kleinen Temperaturhysteresewerts größer ist als der Temperatur-Differenzwert, während der Temperatur-Sollwert mit dem Temperatur-Istwert gleichgesetzt wird, sobald der Temperatur-Differenzwert gleich oder größer wird als die maximal zulässige Temperaturdifferenz zuzüglich des Temperaturhysteresewerts.

Der maximal zulässige Temperatur-Differenzwert ist in der Regel abhängig von der Warmseitentemperatur der Peltier-Elemente und wird für die Einspeisung in die Regelschleife vorteilhafterweise aus einer Speichertabelle entnommen.

Weiterhin ist es für eine Optimierung des Regelprozesses bei gleichzeitiger Verbesserung der Zuverlässigkeit von Vorteil, den Strom für die Peltier-Elemente auf einen optimalen Stromwert zu begrenzen, der zur Aufrechterhaltung der für die Peltier-Elemente maximal möglichen Tiefsttemperatur benötigt wird.

Eine Regeleinrichtung zur Temperaturregelung bei einer mit mindestens einem Peltier-Element ausgerüsteten Heiz- und/oder Kühleinrichtung mit einem inneren Regelkreis, der im wesentlichen dem Regelkreis nach Fig. 7 entspricht, ist erfindungsgemäß gekennzeichnet durch einen die Warmseitentemperatur des Peltier-Elements (der Peltier-Elemente) erfassenden Temperatursensor, einen Komparator, der den Differenzwert zwischen dem Warmseitentemperaturwert und dem Kaltseitentemperatur-Istwert berechnet und gegen einen maximal zulässigen Temperatur-Differenzwert vergleicht und durch einen vom Komparator gesteuerten Sollwertumschalter, der einen vorgegebenen Temperatur-Zielwert dann auf den Differenzbildner durchschaltet, wenn der maximal zulässige Temperatur-Differenzwert, abzüglich eines festen, kleinen Temperaturhysteresewerts größer ist als der Differenzwert und den Differenzbildner mit dem Kaltseitentemperatur-Istwert beaufschlagt, sobald der Komparator festgestellt hat, daß der Differenzwert größer ist, als der maximal zulässige Temperatur-Differenzwert zuzüglich des Temperaturhysteresewerts.

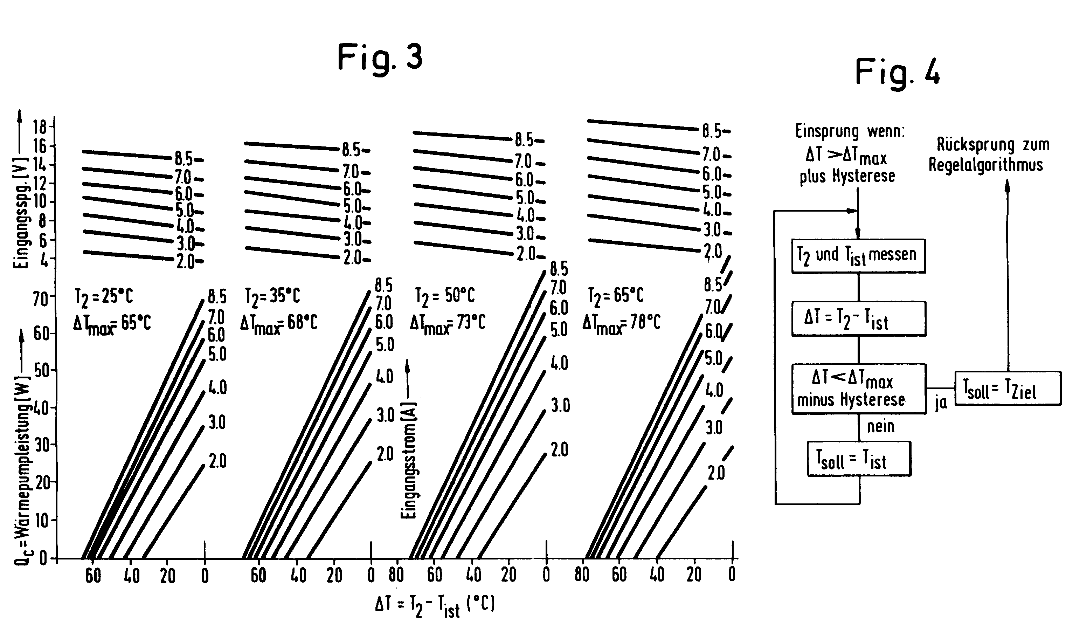

Die Erfindung macht sich die Erkenntnis zunutze, daß es für jedes Peltier-Element eine maximale Temperaturdifferenz $\Delta T_{max}$ zwischen der Temperatur auf der wärmeabgebenden Seite und der wärmeaufnehmenden Seite (Kaltseite) des Peltier-Elements gibt, die abhänigig ist vom Betriebsstrom und der absoluten Warmseitentemperatur. In den von Herstellern von Peltier-Elementen herausgegebenen Kennlinienfeldern,wofür die Fig. 3 ein Beispiel gibt, ist der maximale Temperatur-Differenzwert $\Delta T_{max}$ jeweils für unterschiedliche Warmseitentemperaturen angegeben.

Hierbei gilt der Zusammenhang

- je **höher** die Warmseitentemperatur, desto **höher** $\Delta T_{max}$ bzw.

- je **höher** $\Delta T_{max}$, desto **kleiner** die Wäremepumpleistung.

Aus dem Kennlinienfeld für ein typisches Peltier-Element ist beispielsweise zu erkennen, daß für diesen Typ bei einer Warmseitentemperatur $T_2 = 25°C$ ein $\Delta T_{max} = 65°C$ gilt. Aufgetragen ist die Wärmepumpleistung über den erreichbaren $\Delta T$ bei jeweils fest eingestelltem Speise-Gleichstrom für das Peltier-Element. Zusätzlich angegeben ist das für die Warmseitentemperatur $T_2$ jeweils mögliche $\Delta T_{max}$.

Ein Betrieb des betreffenden Geräts über die angegebenen Grenzwerte hinaus hätte zur Folge, daß die Warmseitentemperatur ansteigt, wenn die Wärmeabfuhr der Wärmesenke (z.B. an einem Kühlkörper) nicht mehr ausreicht. Dies hätte selbstverständlich auch einen Anstieg der Kaltseitentemperatur zur Folge. Bei einem herkömmlichen Regelkreis, wie er in Fig. 7 gezeigt ist, entsteht aus der Regler-Gegenkopplung eine Mitkopplung und das gesamte Regelsystem wird instabil. Eine gewünschte Kaltseitentemperatur wäre damit nicht erreichbar.

Ein wesentlicher Schritt zur erfindungsgemäßen Lösung des Problems besteht darin, daß die Größe $\Delta T_{max}$ geregelt wird. Hierzu wird als zusätzliche Meßgröße die Warmseitentemperatur $T_2$ herangezogen.

Vorteilhaft, in vielen Anwendungsfällen notwendig, ist es zusätzlich, die Stromquelle auf einen Stromwert $I_{opt}$ zu begrenzen, d.h. auf einen Stromwert, der zur Aufrechterhaltung der maximal möglichen Tiefsttemperatur benötigt wird.

Ein Ausführungsbeispiel der Erfindung sowie eine vorteilhafte Lösungsvariante unter Verwendung eines Mikroprozessors wird nachfolgend unter Bezug auf die Zeichnungen näher erläutert.

Es zeigen:

Fig. 1 das Prinzip-Blockschaltbild einer erfindungsgemäßen Regelanordnung;

Fig. 2 die Prinzip-Blockbilddarstellung einer Temperatur- oder Klimakammer einschl. der zugehörigen Stromversorgung, Regelkreis, Umwälzkühlanlage und peripheren Bedienungs- oder Überwachungseinheiten;

Fig. 3 bereits erläuterte Kennlinienfelder für ein bestimmtes Peltier-Element, aus denen sich für bestimmte Warmseitentemperaturen in Abhängigkeit vom Eingangsstrom die maximal möglichen Temperturdifferenzen $\Delta T_{max}$ und die dafür geltenden Wärmepumpleistungen entnehmen lassen;

Fig. 4 das Flußdiagramm einer Unter-Routine innerhalb eines Regelalgorithmus des erfindungsgemäßen Regelungsverfahrens;

Fig. 5 und 6 Temperaturverlaufskurven, gemessen auf der Kaltseite der Peltier-Elemente bzw. im Innenraum einer Peltier-Heiz-/Kühl-Kammer und

Fig. 7 das Blockschaltbild einer Regelanordnung herkömmlicher Art für eine thermoelektrisch betriebene Klimakammer.

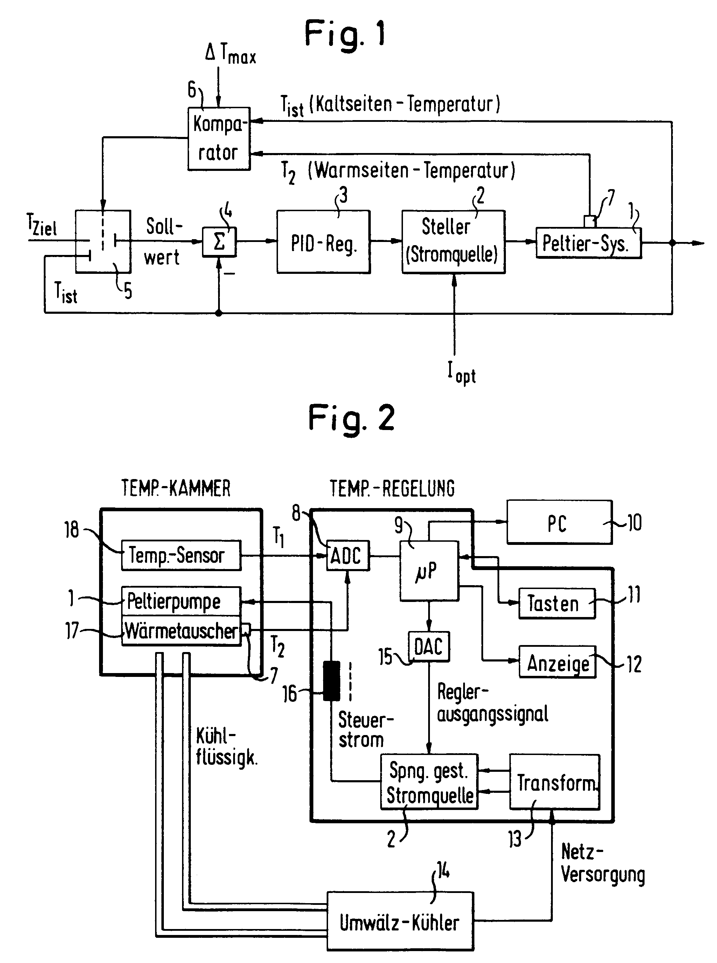

Beim erweiterten Temperaturregelkreis der Erfindung nach Fig. 1 sind wie bei bekannten Regelkreisen nach Fig. 7 das über den PID-Regler 3 und die spannungssteuerbare Konstantstromquelle 2 versorgte Peltier-Elementesystem 1 vorhanden, wobei der Eingang des PID-Reglers 3 durch einen Differenzbildner 4 beaufschlagt ist, der den Differenzwert zwischen einem vorgebbaren Temperatur-Sollwert und der auf der Kaltseite der Peltier-Elemente gemessenen Temperatur $T_{ist}$ bestimmt.

Als zusätzliche Elemente sind ein Komparator 6, ein Sollwertumschalter 5 und ein Temperaturfühler 7 zum Erfassen der Warmseitentemperatur $T_2$ der Peltier-Elemente hinzugekommen. Der eigentliche Temperatur-PID-Regler bleibt, wie erwähnt, als innerer Regelkreis bestehen.

Der **Komparator 6** berechnet zunächst die Differenz zwischen der Warmseitenemperatur $T_2$ und der Kaltseitentemperatur $T_{ist}$, also den Wert $\Delta T$. Anschließend vergleicht er den errechneten Differenzwert $\Delta T$ gegen ein bestimmtes für die gewählten Peltier-Elemente charakteristisches $\Delta T_{max}$. Das Ergebnis des Vergleichs ist ein Entscheidungssignal an den Sollwertumschalter 5 gemäß folgender Gesetzmäßigkeit:

$$(T_2 - T_{ist}) - \Delta T_{max} < 0 \rightarrow \text{Sollwert} = T_{Ziel}$$

$$(T_2 - T_{ist}) - \Delta T_{max} \geq 0 \rightarrow \text{Sollwert} = T_{ist}.$$

Der eine Sollwert $T_{Ziel}$ wird vom Anwender entweder über ein Stellglied oder vorzugsweise über ein Steuerprogramm entsprechend den in einem Register gespeicherten Werten vorgegeben.

Dem **Sollwertumschalter 5** fällt die Aufgabe zu, entsprechend der Vorgabe durch das Entscheidungssignal vom Komparator 6, entweder den einen Sollwert $T_{Ziel}$ oder den Kaltseitentemperatur-Istwert $T_{ist}$ als Sollwert für den inneren Regelkreis zu bestimmen.

Damit der Sollwertumschalter 5 nach Schaltung auf den Kaltseitentemperaturwert $T_{ist}$ nicht sofort wieder auf den Vorgabewert $T_{Ziel}$ umschaltet, ist es erforderlich einen kleinen Hysteresetemperaturwert einzufügen, insbesondere um die in einer Wärmesenke auf der Kaltseite aufgestaute Wärme abzubauen. Die Größe dieses Hysteresewerts ist in Abhängigkeit, von der Wärmekapazität der gewählten Wärmesenke zu wählen. Prinzipiell gilt: Je **höher** die Wärmekapazität, desto **höher** ist der Hysteresetemperaturwert zu wählen. Typischerweise ist der Hysteresetemperaturwert $T_h < \pm 1{,}0°C$, beispielsweise $\pm 0{,}2$ bis $\pm 0{,}3\,°C$.

Für das vom Komparator 6 gelieferte Entscheidungssignal für den Sollwertumschalter gilt dann folgende Gesetzmäßigkeit:

$$(T_2 - T_{ist}) - (\Delta T_{max} - T_h) < 0 \rightarrow \text{Sollwert} = T_{Ziel}$$

$$(T_2 - T_{ist}) - (\Delta T_{max} + T_h) \geq 0 \rightarrow \text{Sollwert} = T_{ist}.$$

Wie oben erwähnt, vergrößert sich die maximal mögliche Temperatur-Differenz $\Delta T$ zwischen der Warm- und der Kaltseite der Peltier-Elemente mit der Zunahme der Warmseitentemperatur $T_2$. Daraus folgt die mit der Erfindung angewendete Erkenntnis, daß die Vorgabe für die maximale Temperaturdifferenz $\Delta T_{max}$ in Abhängigkeit von $T_2$ zu beeinflussen ist.

Zur Realisierung bieten sich zwei Möglichkeiten an.

Zum einen können die $\Delta T_{max}$-Vorgabewerte, abhängig von Warmseitentemperaturwerten $T_2$ für einen möglichen Temperaturbereich in einer Speichertabelle, einer sog. "Look-Up-Tabelle" vorgespeichert und dem Komparator 6 in Abhängigkeit von der jeweiligen Warmseitentemperatur $T_2$ vorgegeben werden. Diese erste Möglichkeit bietet sich insbesondere für eine Softwarelösung des Regelalgorithmus mittels eines Mikroprozessors an, wofür die weiter unten erläuterte Anordnung der Fig. 2 ein Beispiel gibt.

Die andere Möglichkeit zur Bestimmung und Vorgabe des maximalen Temperatur-Differenzwerts $\Delta T_{max}$ ergibt sich durch Aufstellen einer linearen Gleichung bei einer in der Regel zulässigen Vernachlässigung von Nichtlinearitäten. Es gilt dann der folgende lineare Zusammenhang:

$$\Delta T_{max} = A \times T_2 + B.$$

Für das Peltier-Element, dessen Kennlinienfeld die Fig. 3 veranschaulicht ergibt sich für die Konstanten:

A = 0,3 und B = 57,5.

Bei Verwendung einer Look-Up-Tabelle lassen sich die Werte für $\Delta T_{max}$ bei hinreichend feiner Abstufung exakt vorgeben, da sich dabei auch Nichtlinearitäten berücksichtigen lassen. In der Praxis hat sich Jedoch gezeigt, daß die Herleitung von $\Delta T_{max}$ aus dem angegebenen linearen Zusammenhang ausreichend genaue Vorgabewerte für $\Delta T_{max}$ bereitstellt.

Die Fig. 2 zeigt das Prinzip-Blockschaltbild eines vollständigen Systems einer Temperaturkammer mit einem Peltier-Elementesystem 1 (Peltier-Pumpe), einem in innigem wärmeleitendem Kontakt mit dem Peltier-Elementen verbundenen Wärmetauscher 17 mit zugeordnetem Umwälzkühler 14, einem Temperatursensor 18 für die Kaltseiten-Isttemperatur $T_1$ und dem Temperatursensor 7 für die Warmseitentemperatur $T_2$.

Der erfindungsgemäß erweiterte Temperaturregelkreis ist in Form eines durch einen Mikroprozessor 9 gesteuerten Regelalgorithmus aufgebaut. Dem Mikroprozessor 9 werden nach Analog/Digitalumsetzung in einem A/D-Wandler 8 neben der Kaltseiten-Isttemperatur $T_1$ auch die Temperaturwerte $T_2$ des Kühlkörpers am Wärmetauscher 17 zugeführt. Der Mikroprozessor 9 liefert das bereitgestellte Reglerausgangssignal nach Digital-Analogwandler über einen D/A-Wandler 15 an die spannungssteuerbare Konstantstromquelle 2. Der von der Konstantstromquelle 2 gelieferte Strom beaufschlagt die Elemente des Peltier-Systems 1 über eine vorzugsweise induktive Glättungseinrichtung 16. Die Speisestromversorgung für die Konstantstromquelle 2 und den üblicherweise mit Netzstrom versorgten Umwälzkühler 14 liefert eine Transformator- und Umformeinheit 13. Der Mikroprozessor 9 liefert Kontrollsignaldaten an eine periphere Computereinhelt 10. Die Kommunikation mit dem Mikroprozessor 9 erfolgt über ein Tastenfeld 11. Verschiedene Kontrollwerte innerhalb der Gesamtanordnung lassen sich auf einem Anzeigefeld 12 darstellen.

Ein Teil des Regelalgorithmus wird mit Bezug auf die Fig. 4 nachfolgend erläutert:

Befindet sich das zu regelnde System beispielsweise in einer Abkühlphase und wird ein bestimmter Maximalwert der Warmseitentemperatur $T_2$ (insbesondere am Kühlkörper des Wärmetauschers 17) erreicht, so arbeitet die Regler-Software nach einem Unterprogramm, das durch das Flußdiagramm der Fig. 4 veranschaulicht ist und für den Fachmann keiner weiteren Erläuterung bedarf.

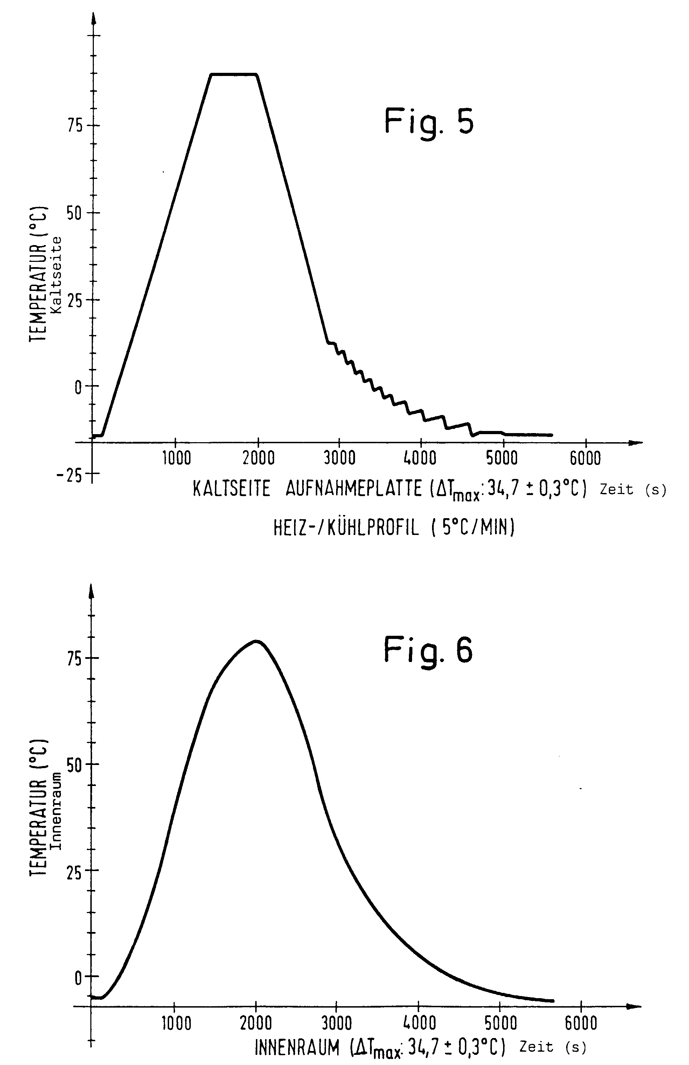

Die Fig. 5 und 6 zeigen die typischen gemessenen Temperaturverlaufskurven unter Einsatz eines erfindungsgemäßen Reglersystems. Die Fig. 5 verdeutlicht den Temperaturverlauf auf der Kaltseite der Peltier-Elemente bei Vorgabe einer Schaltschwelle für $\Delta T_{max}$ von 34,7 °C und einem Hysteresetemperaturwert von $T_h = \pm 0{,}3\,°C$.

Bei der Abkühlphase sind treppenförmige "Erholungspausen" des Systems zu erkennen, die sich jedoch aufgrund thermischer Trägheit auf die Innenraumtemperatur der Temperaturkammer nicht auswirken. Wie die gemessenen Kurven zeigen wird bei Anwendung der erfindungsgemäßen Regelung für die gewählten Vorgabewerte eine Tiefsttemperatur von etwa -15 °C erreicht. Ohne die erfindungsgemäße $\Delta T_{max}$-Regelung lassen sich nur Tiefsttemperaturen von etwa +5 °C erreichen. Wird abweichend von der software-programmierten Lösung mit Mikroprozessor gemäß Fig. 2 der erfindungsgemäß erweiterte Regelkreis nach Fig. 1 "hardwaremäßig" aufgebaut, so kann von einem handelsüblichen Temperaturregler ausgegangen werden. Dieser muß einen programmierbaren Limitkomparator als Komparator 6 mit Schaltausgang und einen zusätzlichen Meßeingang für den Warmseitentemperaturwert $T_2$ aufweisen. Die Schaltschwelle ist hinsichtlich der benötigten Hysterese empirisch zu ermitteln und zu programmieren. Außerdem ist ein Sollwert-Rampengeber, beispielsweise in Verbindung mit dem Limitkomparator mit Steuereingang für START/ STOP der Rampe erforderlich. Das eine Temperaturrampe vorgebende Signal des Sollwertrampengebers wird bei Überschreiten einer Warmseiten-Grenztemperatur gestoppt und bei Unterschreiten wieder freigegeben.

**Patentansprüche**

1. Verfahren zur Temperaturregelung in einer mit mindestens einem Peltier-Element ausgerüsteten Heiz- und/oder Kühleinrichtung, bei dem die Differenz zwischen einem Temperatur-Sollwert und einem gemessenen Temperatur-Istwert ($T_{ist}$) auf der Kaltseite des Peltier-Elements über eine PID-Regelstrecke den Strom für das Peltier-Element bestimmt **dadurch gekennzeichnet, daß**

   - die Warmseitentemperatur ($T_2$) des Peltier-Elements gemessen und der Temperatur-Differenzwert zwischen der Warmseitentemperatur ($T_2$) und dem (Kaltseiten-)Temperatur-Istwert ($T_{ist}$) bestimmt wird,

   - der Temperatur-Differenzwert ($\Delta T = T_2 - T_{ist}$) gegen eine maximal zulässige Temperaturdifferenz ($\Delta T_{max}$) zwischen der Warm- und Kaltseite des Peltier-Elements verglichen wird und daß

   - als Temperatur-Sollwert ein für eine gewünschte Betriebstemperatur vorgegebener Temperatur-Zielwert ($T_{Ziel}$) verwendet wird, solange die maximal zulässige Temperatur-Differenz ($\Delta T_{max}$) abzüglich eines festen kleinen Temperturhysteresewerts ($T_h$) größer ist als der Temperatur-Differenzwert ($\Delta T$), während der Temperatur-Sollwert ($T_{soll}$) mit dem Temperatur-Istwert ($T_{ist}$) gleichgesetzt wird, sobald der Temperatur-Differenzwert gleich oder größer wird als die maximal zulässige Temperatur-Differenz ($\Delta T_{max}$) zuzüglich des Temperaturhysterewerts ($T_h$).

2. Verfahren nach Anspruch 1, **dadurch gekennzeichnet, daß** die maximal zulässige Temperatur-Differenz ($\Delta T_{max}$) in Abhängigkeit von der Warmseitentemperatur ($T_2$) vorgegeben wird.

3. Verfahren nach Anspruch 1, **dadurch gekennzeichnet, daß** die maximal zulässige Temperaturdifferenz ($\Delta T_{max}$) in Abhängigkeit von der Warmseitentemperatur ($T_2$) aus einer Speichertabelle entnommen wird.

4. Verfahren nach einem der vorstehenden Ansprüche, **dadurch gekennzeichnet**, daß der Strom für das Peltier-Element auf einen optimalen Stromwert ($I_{opt}$) begrenzt wird, der zur Aufrechterhaltung der für das Peltier-Element maximal möglichen Tiefsttemperatur benötigt wird.

5. Regeleinrichtung zur Temperaturregelung bei einer mit mindestens einem Peltier-Element ausgerüsteten Heiz- und/oder Kühleinrichtung mit

   - einem PID-Regler (3), der eingangsseitig vom Ausgang eines Differenzbildners (4) durch den Differenzwert zwischen einem vorgebbaren Temperatur-Sollwert und einem gemessenen Temperatur-Istwert ($T_{ist}$) auf der Kaltseite des Peltier-Elements beaufschlagt ist, und mit

   - einer vom PID-Regler (3) gesteuerten, spannungssteuerbaren Konstant-Stromquelle (2), die den Speisestrom für das Peltier-Element bestimmt,

   **gekennzeichnet durch**

   - einen die Warmseitentemperatur ($T_2$) des Peltier-Elements (1) erfassenden Temperatursensor (7),

   - einen Komparator (6), der den Temperatur-Differenzwert ($\Delta T$) zwischen dem Warmseitentemperaturwert ($T_2$) und dem Kaltseitentemperatur-Istwert ($T_{ist}$) berechnet und gegen einen maximal zulässigen Temperatur-Differenzwert ($\Delta T_{max}$) vergleicht und durch

   - einen vom Komparator (6) gesteuerten Sollwertumschalter (5) der einen vorgegebenen Temperatur-Zielwert ($T_{Ziel}$) dann auf den Differenzbildner (4) durchschaltet, wenn der maximal zulässige Temperatur-Differenzwert ($\Delta T_{max}$) abzüglich eines festen, kleinen Temperaturhysteresewerts ($T_h$) größer ist als der Temperatur-Differenzwert ($\Delta T$) und den Differenzbildner (4) mit dem Kaltseitentemperatur-Istwert ($T_{ist}$) beaufschlagt, sobald der Komparator (6) festgestellt hat, daß der Temperatur-Differenzwert größer ist als oder gleich der maximal zulässige Temperatur-Differenzwert ($\Delta T_{max}$) zuzüglich des Temperaturhysterewerts ($T_h$).

6. Regeleinrichtung nach Anspruch 5, **dadurch ge-**

**kennzeichnet**, daß der maximal zulässige, am Komparator (6) vorgegebene, Temperatur-Differenzwert ($\Delta T_{max}$) aus dem Zusammenhang

$$\Delta T_{max} = A \times T_2 + B$$

bestimmt wird, wobei mit $\Delta T_{max}$ der Temperatur-Differenzwert, mit $T_2$ der Warmseitentemperaturwert und mit A bzw. B für ein bestimmtes Peltier-Element charakteristische Konstanten bezeichnet sind.

7. Regeleinrichtung nach Anspruch 6, **dadurch gekennzeichnet**, daß die Regelungsverfahrensschritte in einen Mikroprozessor (9) implementiert ist und daß die maximal zulässigen Temperatur-Differenzwerte ($\Delta T_{max}$) aus einer vorprogrammierten Speichertabelle aufrufbar sind.

**Claims**

1. A process for temperature regulation in a heating and/or cooling device equipped with at least one Peltier element, in which process the difference between a desired temperature value and a measured actual temperature value ($T_{actual}$) on the cold side of the Peltier element determines the current for the Peltier element via a PID control system, **characterised in that**

   - the warm side temperature ($T_2$) of the Peltier. element is measured and the temperature difference value between the warm side temperature ($T_2$) and the (cold side) actual temperature value ($T_{actual}$) is determined,
   - the temperature difference value ($\Delta T = T_2 - T_{actual}$) is compared with a maximum permissible temperature difference ($\Delta T_{max}$) between the warm and cold sides of the Peltier element, and that
   - as the desired temperature value a target temperature value ($T_{target}$) for a prespecified desired operational temperature is used for as long as the maximum permissible temperature difference ($\Delta T_{max}$) minus a fixed small temperature hysteresis value ($T_h$) is larger than the temperature difference value ($\Delta T$), whereas, as soon as the temperature difference value becomes the same as or larger than the maximum permissible temperature difference ($\Delta T_{max}$) plus the temperature hysteresis value ($T_h$), the desired temperature value ($T_{desired}$) is set equal to the actual temperature value ($T_{actual}$).

2. A process according to claim 1, **characterised in that** the maximum permissible temperature difference ($\Delta T_{max}$) is prespecified in dependence on the warm side temperature ($T_2$).

3. A process according to claim 1, **characterised in that** the maximum permissible temperature difference ($\Delta T_{max}$) in dependence on the warm side temperature ($T_2$) is taken from a memory table.

4. A process according to any one of the preceding claims, **characterised in that** the current for the Peltier element is limited to an optimum current value ($I_{opt}$) necessary for maintaining the maximum possible lowest temperature for the Peltier element.

5. A control device for temperature regulation in a heating and/or cooling device equipped with at least one Peltier element, the device comprising:

   - a PID controller (3) which is actuated on its input side from the output of a difference former (4) with a difference value between a prespecifiable desired temperature value and a measured actual temperature value ($T_{actual}$) on the cold side of the Peltier element,
   - a voltage controllable constant current source (2) controlled by the PID controller (3) and which determines the supply current for the Peltier element,

     **characterised by**

   - a temperature sensor (7) for measuring the warm side temperature ($T_2$) of the Peltier element (1),
   - a comparator (6) which calculates the temperature difference value ($\Delta T$) between the warm side temperature value ($T_2$) and the actual cold side temperature value ($T_{actual}$) and compares it with a maximum permissible temperature difference value ($\Delta T_{max}$),
   - a desired value switching unit (5) which is controlled from the comparator (6) and which switches through to the difference former (4) a prespecified target temperature value ($T_{target}$) when the maximum permissible temperature difference value ($\Delta T_{max}$) minus a fixed small temperature hysteresis value ($T_h$) is larger than the temperature difference value ($\Delta T$) and actuates the difference former (4) with the actual cold side temperature value ($T_{actual}$) as soon as the comparator (6) has established that the temperature difference value is larger than or equal to the maximum permissible temperature difference value ($\Delta T_{max}$) plus the temperature hysteresis value ($T_h$).

6. A control device according to claim 5, **characterised in that** the maximum permissible difference value ($\Delta T_{max}$) prespecified at the comparator (6) is determined from the relation

$$\Delta T_{max} = A \times T_2 + B$$

wherein $\Delta T_{max}$ is the temperature difference value, $T_2$ is the warm side temperature value and A and B are constants specific to the Peltier element concerned.

7. A control device according to claim 6, **characterised in that** the control process steps are implemented in a microprocessor (9) and that the maximum permissible temperature difference values ($\Delta T_{max}$) can be called up from a pre-programmed memory table.

## Revendications

1. Procédé de régulation de température dans une installation de chauffage et/ou de réfrigération équipée d'au moins un élément Peltier, dans lequel la différence entre une valeur de consigne de la température et une valeur effective mesurée ($T_{ist}$) de la température détermine sur le côté froid de l'élément Peltier, par l'intermédiaire d'un système de régulation PID, le courant pour l'élément Peltier, **caractérisé en ce** que

   - l'on mesure la température du côté chaud ($T_2$) de l'élément Peltier et détermine la différence de température entre la température du côté chaud ($T_2$) et la valeur effective de la température (du côté froid) ($T_{ist}$),
   - la différence de température ($\Delta T = T_2 - T_{ist}$) est comparée avec la différence de température maximale admissible ($\Delta T_{max}$) entre le côté chaud et le côté froid de l'élément Peltier, et que
   - l'on utilise comme valeur de consigne de la température une valeur de température cible ($T_{ziel}$) prédéterminée pour une température de fonctionnement désirée, aussi longtemps que la différence de température maximale admissible ($\Delta T_{max}$) moins une faible valeur d'hystérésis fixe de la température ($T_h$) est supérieure à la différence de température ($\Delta T$), alors que la valeur de consigne de la température ($T_{soll}$) est égalée à la valeur effective de la température ($T_{ist}$) dès que la différence de température est égale ou supérieure à la différence de température maximale admissible ($\Delta T_{max}$) plus la valeur d'hystérésis de la température ($T_h$).

2. Procédé selon la revendication 1, caractérisé en ce que la différence de température maximale admissible ($\Delta T_{max}$) est prédéterminée en fonction de la température du côté chaud ($T_2$).

3. Procédé selon la revendication 1, caractérisé en ce que la différence de température maximale admissible ($\Delta T_{max}$) est déterminée, en fonction de la température du côté chaud ($T_2$), dans une table de mémoire.

4. Procédé selon l'une des revendications précédentes, caractérisé en ce que le courant pour l'élément Peltier est limité à une valeur de courant optimale ($I_{opt}$) qui est nécessaire pour maintenir la température la plus basse possible au maximum pour l'élément Peltier.

5. Dispositif de réglage pour la régulation de température dans une installation de chauffage et/ou de réfrigération équipée d'au moins un élément Peltier, comprenant

   - un régulateur PID (3) à l'entrée duquel est transmise, à partir de la sortie d'un différenciateur (4), la différence entre une valeur de consigne prédéterminable de la température et une valeur effective mesurée ($T_{ist}$) de la température du côté froid de l'élément Peltier, et
   - une source de courant constant (2) commandée par le régulateur PID (3), dont la tension peut être commandée et qui détermine le courant d'alimentation pour l'élément Peltier,

   **caractérisé en ce** qu'il comprend

   - un détecteur de température (7) qui enregistre la température du côté chaud ($T_2$) de l'élément Peltier (1),
   - un comparateur (6) qui calcule la différence de température ($\Delta T$) entre la valeur de température du côté chaud ($T_2$) et la valeur effective ($T_{ist}$) de la température du côté froid et la compare avec une différence de température maximale admissible ($\Delta T_{max}$), et
   - un commutateur de valeur de consigne (5) commandé par le comparateur (6), qui envoie une valeur de température cible ($T_{ziel}$) au différenciateur (4) si la différence de température maximale admissible ($\Delta T_{max}$) moins une faible valeur d'hystérésis fixe de la température ($T_h$) est supérieure à la différence de température ($\Delta T$), et qui envoie au différenciateur (4) la valeur effective ($T_{ist}$) de la température du coté froid dès que le comparateur (6) a établi que la différence de température est supérieure ou égale à la différence de température maximale admissible ($\Delta T_{max}$) plus la valeur d'hystérésis de la température ($T_h$).

6. Dispositif de réglage selon la revendication 5, caractérisé en ce que la différence de température maximale admissible ($\Delta T_{max}$) prédéterminée sur le

comparateur (6) est déterminée à partir de la relation

$$\Delta T_{max} = A \times T_2 + B$$

où $\Delta T_{max}$ est la différence de température, $T_2$ la température du côté chaud, et A et respectivement B, des constantes caractéristiques pour un élément Peltier déterminé.

7.  Dispositif de réglage selon la revendication 6, caractérisé en ce que les opérations de réglage sont implémentées dans un microprocesseur (9), et que la différence de température maximale admissible ($\Delta T_{max}$) peut être appelée dans une table de mémoire préprogrammée.

EP 0 602 645 B1

# Fig. 1

$\Delta T_{max}$

6

Komparator

$T_{ist}$ (Kaltseiten - Temperatur)

$T_2$ (Warmseiten - Temperatur)

$T_{Ziel}$

Sollwert

$\Sigma$ 4

3 PID-Reg.

2 Steller
(Stromquelle)

7 1 Peltier-Sys.

$T_{ist}$ 5

$I_{opt}$

# Fig. 2

TEMP.-KAMMER

TEMP.-REGELUNG

18 Temp.-Sensor

$T_1$

8 ADC

9 µP

PC 10

1 Peltierpumpe

Tasten 11

17 Wärmetauscher

$T_2$

7

15 DAC

Anzeige 12

16

Steuerstrom

Reglerausgangssignal

Kühl-
flüssigk.

Spng. gest.
Stromquelle

Transform.

2

13

Netz-
Versorgung

14 Umwälz-Kühler

9

# Fig. 3

Eingangsspg.[V]

$Q_C$ = Wärmepumpleistung[W]

Eingangsstrom[A]

$T_2 = 25°C$
$\Delta T_{max} = 65°C$

$T_2 = 35°C$
$\Delta T_{max} = 68°C$

$T_2 = 50°C$
$\Delta T_{max} = 73°C$

$T_2 = 65°C$
$\Delta T_{max} = 78°C$

$\Delta T = T_2 - T_{ist}$ (°C)

# Fig. 4

Einsprung wenn:
$\Delta T > \Delta T_{max}$
plus Hysterese

Rücksprung zum
Regelalgorithmus

$T_2$ und $T_{ist}$ messen

$\Delta T = T_2 - T_{ist}$

$\Delta T < \Delta T_{max}$ minus Hysterese — ja → $T_{soll} = T_{Ziel}$

nein

$T_{soll} = T_{ist}$

EP 0 602 645 B1

Fig. 5

TEMPERATUR (°C) Kaltseite

KALTSEITE AUFNAHMEPLATTE ($\Delta T_{max}$: 34,7 ± 0,3°C) Zeit (s)

HEIZ-/KÜHLPROFIL (5°C/MIN)

Fig. 6

TEMPERATUR (°C) Innenraum

INNENRAUM ($\Delta T_{max}$: 34,7 ± 0,3°C) Zeit (s)

# Fig. 7